# EUROPÄISCHE PATENTANMELDUNG

(11) **EP 0 928 555 A1**
(43) Veröffentlichungstag der Anmeldung: **14.07.1999**
(21) Anmeldenummer: 97811028.6
(22) Anmeldetag: 29.12.1997
(51) Int. Cl.: A01F 15/08, B30B 9/30, B30B 15/22, B65B 1/24, B65B 1/38

(54) **Anlage und Verfahren zum Portionieren von faserigem Material**

(71) Anmelder: Fankhauser, Hans, 3415 Hasle-Rüegsau (CH); Liechti, Jakob, 3507 Biglen (CH)
(72) Erfinder: Fankhauser, Hans, 3415 Hasle-Rüegsau (CH); Liechti, Jakob, 3507 Biglen (CH)
(74) Vertreter: BOVARD AG - Patentanwälte

(57) **Zusammenfassung**

Die Erfindung ist insbesondere zum Portionieren von Heu oder Stroh bestimmt und soll relativ kompakt und einfach im Aufbau sein. Der erfindungsgemässen Lösung liegt eine Volumendosierung zugrunde, bei der das faserige Material einer definierten Verdichtungskraft ausgesetzt und erst dann zu einer Portion abgetrennt wird. Die Anlage weist eine stationäre Kammer (3) und Fördermittel (2) zum Füllen dieser Kammer auf. Ein Beschickungsorgan (6) fördert das Material in eine bewegliche Kammer (8a), in der mittels einer Kraftmesseinrichtung (11) die auf das Material ausgeübte Kraft gemessen wird. Durch eine Schneidvorrichtung (12) wird das aus der beweglichen Kammer ragende Materials abgetrennt. Nach der Bewegung der Kammer in eine Entladeposition wird die Portion durch ein Entladeorgan (16) ausgestossen. Mit einer solchen Anlage lässt sich Heu oder Stroh mit hoher Genauigkeit portionieren, ohne dass dabei komplizierte und störungsanfällige Wägeeinrichtungen notwendig sind.

## Beschreibung

Die Erfindung betrifft eine Anlage zum Portionieren von faserigem Material, insbesondere Heu oder Stroh und ein Verfahren zu deren Betrieb.

Um faseriges Material in Portionen zu teilen, beispielsweise um diese anschliessend zu verpacken, liegt es nahe, das Material zu wiegen und gleich schwere Portionen zu bilden. Zur Gewichtsdosierung von Fasermaterial sind aus dem Stand der Technik zwei verschiedene Ansätze bekannt. Ein erster Ansatz besteht darin, das Material so lange in mehreren kleinen Teilmengen auf eine Waage zu geben, bis das gewünschte Gewicht erreicht ist und anschliessend die so gebildete Portion weiter zu verarbeiten. Gemäss einem anderen Ansatz wird ein gleichmässiger Strom des Materials gebildet, dieser im Durchlauf, beispielsweise mittels einer Bandwaage, gewogen und anschliessend der Strom in Portionen unterteilt. Abgesehen davon, dass beide der vorstehend genannten vorgehen Wiegevorrichtungen benötigen, die in der Regel aufwendig und ziemlich störungsanfällig sind, eignen sich beide für Material, das sich leicht in kleine Teilmengen aufteilen lässt, beispielsweise Baumwolle, die üblicherweise in Flocken aufgelöst wird. Bei Material mit vergleichsweise groben und langen Fasern wie beispielsweise Heu oder Stroh ist das Auflösen in kleine Teilmengen wegen des starken Zusammenhangs der einzelnen Fasern fast nicht zu bewältigen.

Der Erfindung liegt daher die Aufgabe zugrunde, eine Anlage vorzuschlagen, die relativ kompakt und einfach im Aufbau ist, die ohne Wiegevorrichtung auskommt und mit der sich faserige Materialien, insbesondere Heu oder Stroh mit hoher Genauigkeit portionieren lassen. Eine weitere Aufgabe der Erfindung besteht darin, ein Verfahren anzugeben, das einen automatischen und störungsfreien Betrieb der Anlage gewährleistet.

Zur Lösung der genannten Aufgaben weist die erfindungsgemässe Anlage die im kennzeichnenden Teil des Anspruchs 1 angegebenen Merkmale auf. Das Erfindungsgemässe Verfahren ist durch die kennzeichnenden Merkmale des Anspruchs 7 definiert. Der erfindungsgemässen Lösung liegt eine Volumendosierung zugrunde, bei der das faserige Material einer definierten Verdichtungskraft ausgesetzt und erst dann zu einer Portion abgetrennt wird. Es hat sich überraschend gezeigt, dass nach der Erfindung hergestellte Heuportionen im Gewicht nur sehr geringfügig voneinander abweichen.

Besondere Ausführungsarten der Erfindung sind in den abhängigen Ansprüchen umschrieben.

Die Erfindung wird nachstehend unter Bezugnahme auf ein in den Zeichnungen schematisch dargestelltes Ausführungsbeispiel näher beschrieben. Es zeigt
- Figur 1: einen entlang der in Figur 2 mit I-I bezeichneten Linie geschnittenen, stark vereinfachten Grundriss einer erfindungsgemässen Anlage,
- Figur 2: einen Schnitt durch die Anlage entlang der Linie II-II in Figur 1 und
- Figur 3: eine perspektivische Ansicht eines Teils der Anlage, etwa in Richtung des Pfeils III in Figur 1 gesehen.

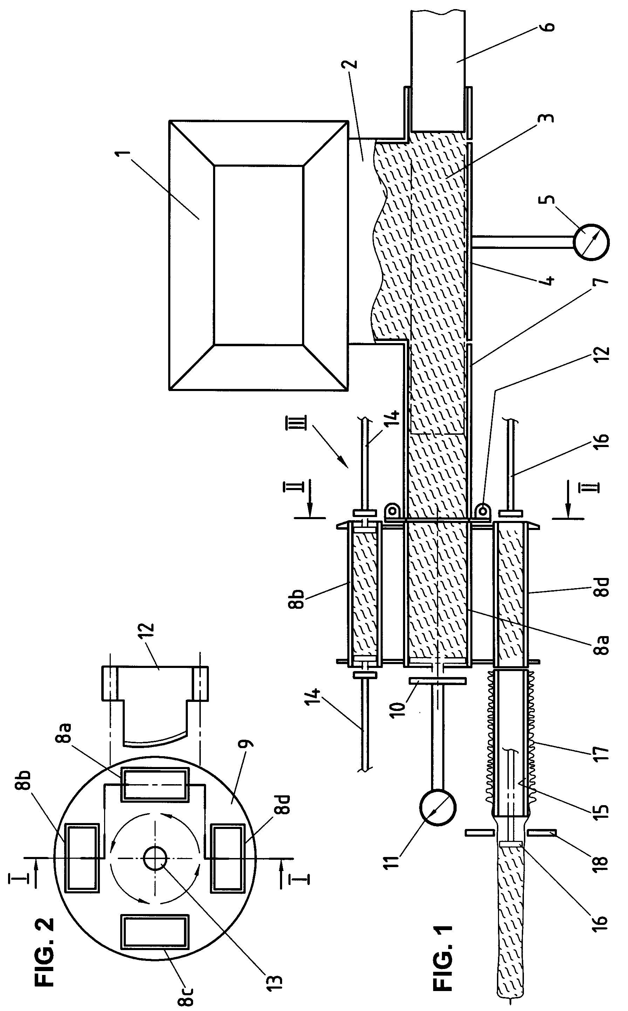

Figur 1 zeigt einen stark vereinfachten, schematischen Grundriss eines Ausführungsbeispiels einer erfindungsgemässen Anlage, wobei der Schnittverlauf in Figur 2 angegeben und mit I-I bezeichnet ist. Die Anlage dient zum Portionieren von Heu oder Stroh und zum anschliessenden Verpacken der Portionen. Das Heu oder Stroh wird üblicherweise in Form von Ballen angeliefert, welche geöffnet werden, bevor das Material in einen Trichter 1 gegeben wird. Es könnte aber auch ein automatischer Ballenöffner anstelle des Trichters vorgesehen werden. Ein Fördermittel, beispielsweise ein Kratzförderer 2, transportiert das Material in eine stationäre Kammer 3, wo es sich ansammelt und dabei leicht verdichtet wird. Der Kratzförderer 2 gewährleistet, dass das Material gleichmässig und locker in die Kammer 3 eingefüllt und dort leicht verdichtet wird. Eine Wand 4 der Kammer 3 ist beweglich gelagert, mit einer Feder zur Kammer hin belastet und mit einem Schalter verbunden. Die so gebildete Kraftmesseinrichtung 5 spricht bei einem voreingestellten Wert der durch das Material auf die Wand 4 ausgeübten Kraft an und bewirkt, dass der Kratzförderer 2 angehalten wird.

Ein vorzugsweise intermittierend arbeitendes Beschickungsorgan 6, beispielsweise eine hydraulische oder pneumatische Kolben- Zylinderanordnung oder ein durch einen Kettenantrieb oder einen Linearmotor angetriebener Schieber wird sofort nach dem Anhalten des Kratzförderers 2 in Betrieb gesetzt und schiebt das in der Kammer angesammelte Material durch einen Beschickungskanal 7 in eine bewegliche Kammer 8a, wo es weiter verdichtet wird. Die Dimensionen sind dabei so gewählt, dass mehrere Hübe des Beschickungsorgans erforderlich sind, bis der gewünschte Füllgrad in der beweglichen Kammer erreicht ist.

Auf der dem Beschickungsorgan 6 gegenüberliegenden Seite ragt ein Kolben 10 in die bewegliche Kammer 8a, mit dem eine Kraftmesseinrichtung 11 verbunden ist. Die Kraftmesseinrichtung 11 ist so eingestellt, dass sie anspricht, wenn der gewünschte Verdichtungsgrad des Materials in der beweglichen Kammer erreicht ist. Die Kraftmesseinrichtung könnte im einfachsten Fall direkt mit dem Beschickungsorgan 6 verbunden sein und die gegenüberliegende Seite der beweglichen Kammer während der Beschickung verschlossen werden. Der Kolben 10 bietet aber den Vorteil, dass damit das Volumen der Kammer eingestellt werden kann, je nachdem wie weit man ihn in die Kammer einfahren lässt. Somit kann die Grösse der Portionen sowohl durch das Volumen als auch durch den Verdichtungsgrad des Materials eingestellt werden.

Wenn die Bewegung des Beschickungsorgans 6 durch Ansprechen der Kraftmesseinrichtung 11 gestoppt wurde, tritt die Schneidvorrichtung 12 in Funktion und durchtrennt das Material unmittelbar am Eintrittsende der beweglichen Kammer 8a. Die Schneidvorrichtung kann aus einem hydraulisch oder pneumatisch angetriebenen Messer bestehen. Es sind aber auch Varianten möglich, bei denen eine feststehende Kante die Schneidvorrichtung bildet, an der die Kammer 8a bei ihrer weiter unten beschriebenen Bewegung das Material abschert.

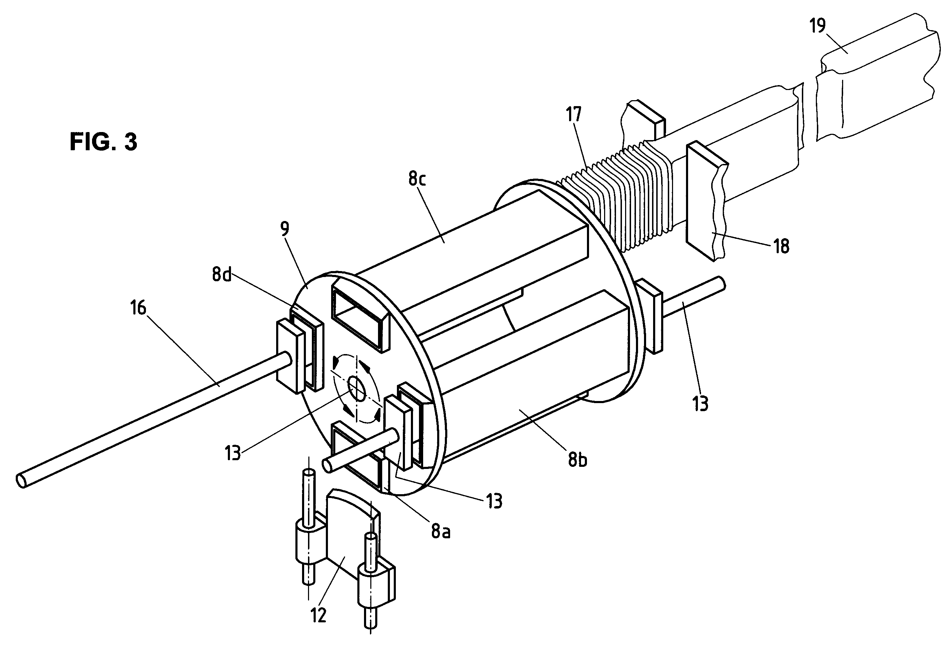

Wie insbesondere in den Figuren 2 und 3 ersichtlich, sind in der Anlage insgesamt vier bewegliche Kammern 8a bis 8d vorgesehen, die parallel zueinander auf einem Träger 9 angeordnet und um eine zentrale Achse 13 drehbar sind. Nach dem Durchtrennen des Materials durch die Schneidvorrichtung 12 drehen sich die beweglichen Kammern um 90°. In der Position hinter dem Beschickungskanal steht nun die leere Kammer 8d und die gefüllte Kammer 8a nimmt die Position ein, an der zuvor die Kammer 8b stand. In dieser Position der Kammer fahren von beiden Seiten Verdichtungskolben 14 in die Kammer ein und verdichten das Material noch weiter. Dieser Schritt ist nicht unbedingt erforderlich, jedoch haben Versuche gezeigt, dass insbesondere die Genauigkeit der Dosierung besser ist, wenn das Material nicht schon beim Beschicken auf den für das nachfolgende Verpacken gewünschten Verdichtungsgrad gebracht wird. Nach einer Variante kann auch mit einem einzigen Verdichtungskolben 14 gearbeitet werden, wobei das gegenüberliegende Ende der Kammer vorübergehend verschlossen wird.

Nach dem soeben geschilderten Verdichtungsvorgang fahren die Verdichtungskolben 14 aus der Kammer zurück und die Kammern drehen sich um weitere 90°, so dass die betrachtete Kammer 8a danach die in Figur 2 mit 8c bezeichnete Position einnimmt, in der das in ihr enthaltene Material nicht bearbeitet wird. Nach einer weiteren Vierteldrehung der Kammern steht die Kammer vor dem Entladestutzen 15 und ein Entladeorgan in Form eines Ausstosskolbens 16 schiebt das Material aus der Kammer durch den Entladestutzen hindurch in eine Verpackungsvorrichtung, die aber nicht Gegenstand der vorliegenden Erfindung ist. Eine einfache Verpackungsvorrichtung kann etwa wie in den Figuren 1 und 3 dargestellt ausgebildet sein. Auf den Entladestutzen 15 ist ein Folienschlauch 17 geschoben, der mittels einer Schweissvorrichtung 18 verschlossen werden kann. Das Material wird durch den Ausstosskolben 16 direkt in diesen Schlauch geschoben und nach dem Zurückziehen des Ausstosskolbens wird der Schlauch wiederum mittels der Schweissvorrichtung 18 verschlossen und die fertige Packung 19 vom Folienschlauch abgetrennt. Sind einmal alle Kammern 8a bis 8d mit Material gefüllt, wird nach jeder Vierteldrehung der Kammern eine Portion ausgestossen.

## Patentansprüche

1. Anlage zum Portionieren von faserigem Material, insbesondere Heu oder Stroh, gekennzeichnet durch eine stationäre Kammer (3), Fördermittel (2) zum Fördern des Materials in die stationäre Kammer, mindestens eine bewegliche Kammer (8a, 8b, 8c, 8d), ein Beschickungsorgan (6) zum Fördern des in der stationären Kammer (3) angesammelten Materials in die bewegliche Kammer, eine Kraftmesseinrichtung (11) zum Messen der durch das Beschickungsorgan auf das Material in der beweglichen Kammer ausgeübten Kraft, eine Schneidvorrichtung (12) zum Abtrennen des aus der beweglichen Kammer ragenden Materials und ein Entladeorgan (16) zum Fördern des Materials aus der beweglichen Kammer.

2. Anlage nach Anspruch 1, gekennzeichnet durch eine weitere Kraftmesseinrichtung (5) zum Messen der durch die Fördermittel auf das Material in der stationären Kammer (3) ausgeübten Kraft.

3. Anlage nach Anspruch 1 oder 2, gekennzeichnet durch mindestens ein in die bewegliche Kammer einführbares Verdichtungsorgan (14).

4. Anlage nach einem der vorangehenden Ansprüche, dadurch gekennzeichnet, dass die Kraftmesseinrichtung (11) mit einem auf der dem Beschickungsorgan (6) gegenüberliegenden Seite in die bewegliche Kammer (8a, 8b, 8c, 8d) einführbaren Organ (10) verbunden ist.

5. Anlage nach einem der Ansprüche 1 bis 3, dadurch gekennzeichnet, dass die Kraftmesseinrichtung (11) mit dem Beschickungsorgan (6) verbunden ist.

6. Anlage nach einem der vorhergehenden Ansprüche, gekennzeichnet durch mehrere, auf einem gemeinsamen Träger (9) angeordnete bewegliche Kammern (8a, 8b, 8c, 8d).

7. Verfahren zum Betrieb der Anlage nach Anspruch 2, dadurch gekennzeichnet, dass die Fördermittel (2) das Material in die stationäre Kammer (3) fördern, bis die weitere Kraftmesseinrichtung (5) anspricht, dass das Beschickungsorgan (6) die sich in einer Beschickungsstellung befindende bewegliche Kammer (8a) so lange mit Material beschickt, bis die Kraftmesseinrichtung (11) anspricht, dass die Schneidvorrichtung (12) das aus der beweglichen Kammer ragenden Material abtrennt und dass die bewegliche Kammer von der Beschickungsstellung in eine Entladestellung bewegt wird, in welcher das Entladeorgan (16) das Material aus der beweglichen Kammer fördert.

8. Verfahren nach Anspruch 7 zum Betrieb der Anlage nach Anspruch 3 dadurch gekennzeichnet, dass die bewegliche Kammer zwischen der Beschickungsstellung und der Entladestellung in einer Verdichtungsstellung angehalten wird, in welcher das Verdichtungsorgan (14) in die Kammer eingeführt wird.
